# EUROPEAN PATENT SPECIFICATION

(11) **EP 1 072 830 B1**
(45) Date of publication and mention of the grant of the patent: **22.09.2004**
(21) Application number: 99830480.2
(22) Date of filing: 26.07.1999
(51) Int. Cl.: F16K 11/078

(54) **Hot and cold water mixing valve with small dimensions**
Warm- und Kaltwasser- Mischventil mit kleinen Abmessungen
Robinet mitigeur d'eau chaude et froide à petites dimensions

(43) Date of publication of application: 31.01.2001
(73) Proprietor: GAC Plumbing Products Inc., Largo, Florida 33777 (US)
(72) Inventor: Orlandi, Roberto, 6918 Figino (CH); Orlandi, Alessio, Castiglione delle Stiviere (Mantova) (IT)
(74) Representative: Sangiacomo, Fulvia

(56) References cited:
- EP-A- 0 433 781
- EP-A- 0 505 328
- EP-A- 0 647 807
- EP-A- 0 738 847
- US-A- 4 997 005
- US-A- 5 490 540
- US-A- 5 518 027
- US-A- 5 522 429

## Description

The present invention relates to the sector of hot and cold water mixing valves.

Various embodiments of mixing valves of the cartridge type and with valve elements in the form of plates made of a ceramic material or the like have already become known. However, all of these have relatively large diameters and heights, which are required by their specific structure, by the requirement of maintaining the water supply demand through such a structure. Moreover, the mixing valves of large dimensions also require larger dimensions for the bodies of faucets, in which they will be inserted for use, and therefore and disadvantageously a greater use of material, greater space requirements, etc. Document EP-A-0647807, which contains the preamble of claim 1, discloses such a mixing valve.

The object is to resolve the problems and to remedy the above-mentioned disadvantages.

Another object is to provide a cartridge mixing valve which, due to the shape, combination and arrangement of its components, will have a more compact structure and a much more contained space requirement of the most traditional mixing valves.

Another object is also that of providing a mixing valve of very small dimensions which does not compromise the mixing efficiency thanks to the configuration of the apertures provided in the valve plates for the passage of water.

These objects are accomplished, with a hot and cold water mixing valve according to claim 1.

At any rate, greater details shall become more evident from the description given below with reference to the attached simplified drawings, in which:
Figures 1 and 2 show axial sectional views of the assembly of the mixing valve closed and opened, respectively;
Figure 3 shows the mixing valve inserted in a faucet body; and
Figures 4 and 5 both show a cross section of the mixing valve with the valve plates in the closing and mixing positions, respectively.

The mixing valve comprises a cartridge body 11, a valve unit 12 in said body and a control unit 13 for the opening and closing of the valve.

The body 11 is essentially cylindrical, hollow and closed at the base by a bottom 14, spring-applied there and having a coaxial tubular collar 15 at its top. The cylindrical body has an overall external diameter d of about 25.4 mm, i.e., 1 inch, its height h including the bottom, but excluding the collar, is about 24-26.5 mm, with a ratio of height h to diameter d of 1 to 1.1.

The collar 15 is about 8-9 mm high from a total height of the body 11, including the bottom, of about 32-35 mm.

The body 11 is provided with a radial tooth 16 for orienting the valve when it is activated. One or two positioning feet 17 may be provided under the bottom. The collar 15, if necessary, may be grooved on the outside or toothed in parallel with its axis.

The valve unit 12 comprises two overlapping plates, made of ceramic or another suitable material, a fixed lower plate 18 and an upper plate 19 resting, moving and rotating on the fixed one.

The lower plates 18 rests and is supported with the interposition of a seal 20 on the bottom 14 of the body 11. It has two slits 21, 22 for the inlet of hot and cold water, respectively, and an outlet passage 23 for hot, cold or mixed water. The slits 21, 22 and the passage 23 coincide with corresponding holes provided in the bottom 14 and communicate with hot and cold water supply ducts, respectively, and with a water distribution duct for use.

In its turn, the movable plate 19 has a mixing chamber 24, which is opened at the bottom towards the lower plate 18 and closed towards the top. If necessary, an antinoise element 25 in the form of a screen or other may be arranged in the said chamber 24.

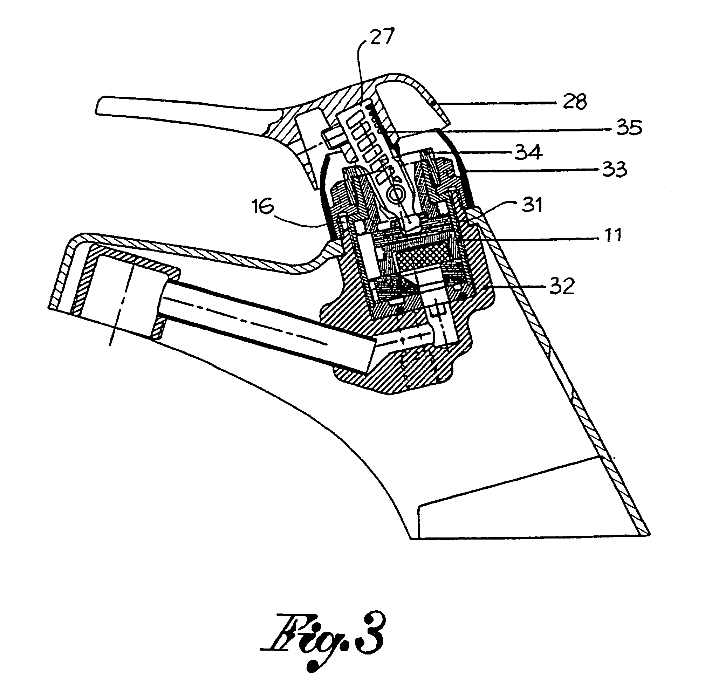

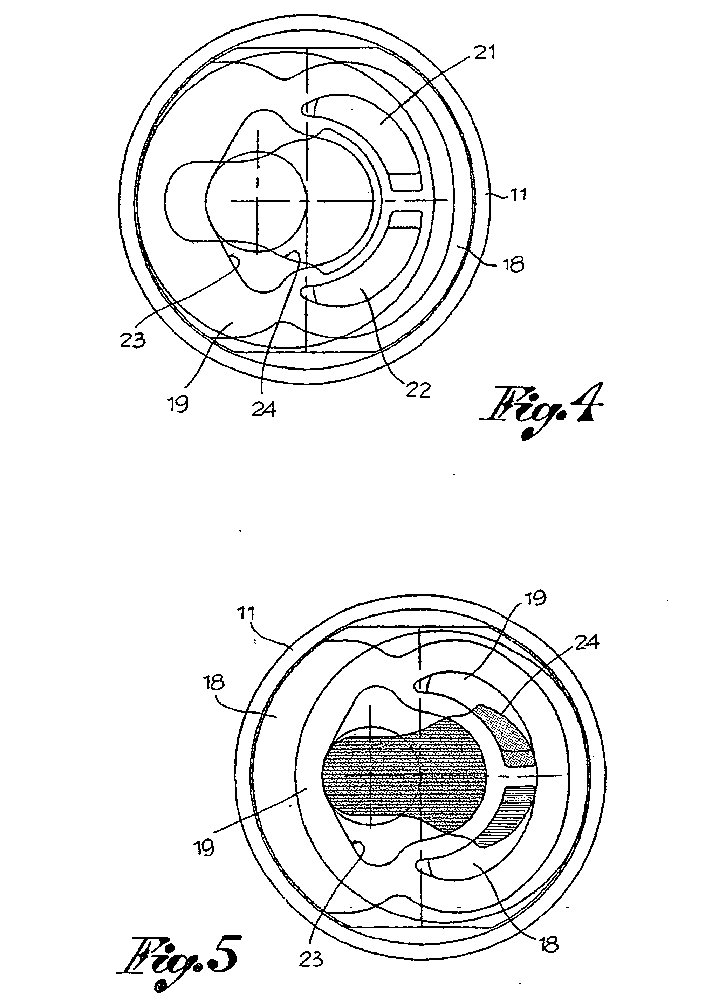

In particular, the configuration and the arrangement of the inlet slits 21 and 22 and of the outlet passage 23 of the fixed plate 18 and of the mixing chamber 24 of the fixed plate 19 are as shown in Figures 4 and 5 and prove to be particularly suitable for the manufacture of a small cartridge like that described here. They also make possible the passage from the distribution of only hot water to that of only cold water by means of rotating the plate by an angle of 90 to 100°.

The control unit 13 is provided for moving and rotating the movable plate on the fixed one. The unit comprises a pulling disk 26 which is fit flush on the movable plate 19 and is thus movable with same and an operating lever 27 provided with a pressing handle 28. The operating lever 27 is mounted oscillating on a cross pin 29, which is supported by a support bushing 30 mounted and coaxially rotating in the collar 15 of the body 11. Thus, the opening and closing of the valve correspond to the oscillations of the operating lever on the pin 29, while variations in the supply of hot and cold mixed water correspond to the rotations of the lever with the support bushing 30 within the range of the above-mentioned angle formation.

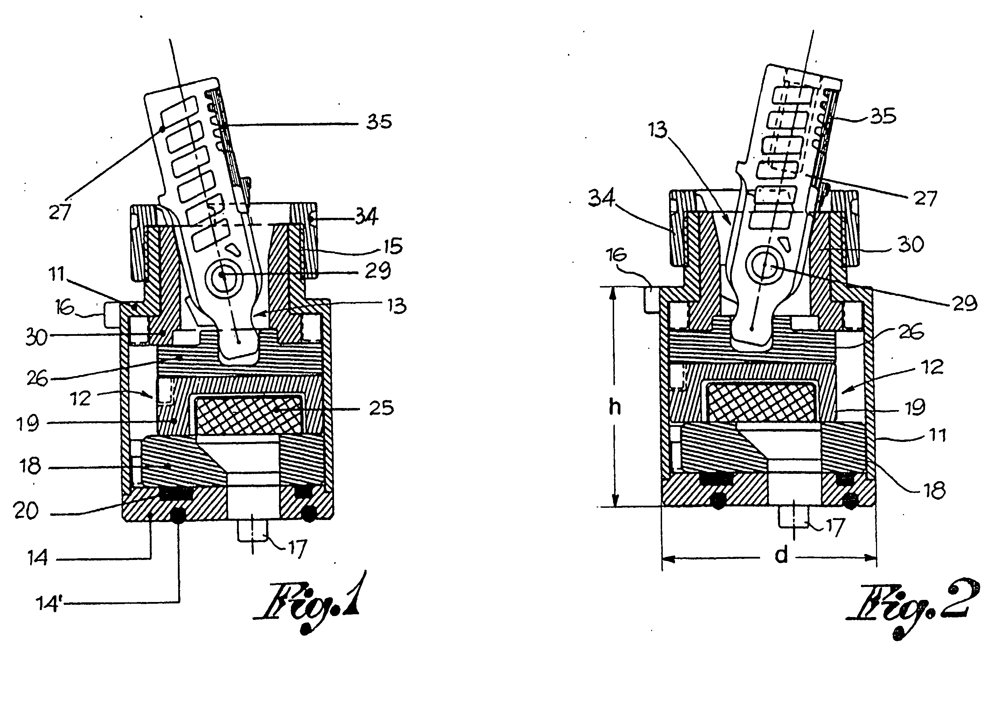

The mixing valve described above is inserted with the interposition of a bottom seal 14' in a corresponding housing 31 provided in a faucet body 32 as shown, for example, in Figure 3 and it is blocked there by means of a locking ring nut 33.

Therefore, the radial tooth 16 defines the orientation of the valve and does prevent its rotation.

Moreover, a temperature limiting means 34 may be mounted on the collar 15 of the body, which operates by means of limiting the rotation of the lever and thus of the movable plate towards the hot water inlet slit, and a supply limiting means 35 may be arranged between the collar and the lever, which in its turn operates by means of limiting the oscillation of the lever and thus of the movement of the plate in the opening direction of the water inlet slits.

## Claims

1. Hot and cold water mixing valve, comprising a body (11) which contains a valve unit (12) with ceramic plates for control the partial or total opening and closing of the inlet and outlet water passages, and a control unit (13) for the valve unit, the body being essentially cylindrical, hollow, closed at its based by a bottom (14) on which the valve unit (12) rests, and having a collar (15) at its top, in which is mounted the control unit (13) with the possibility of oscillations and rotations, on two axes at right angles to it, and in which the valve unit (12) consists of two overlapping plates having water inlet, mixing and outlet passages, the two overlapping plates comprising a fixed plate (18) and a movable plate (19), the movable plate (19) having a mixing chamber (24), which is opened at the bottom towards the fixed plate (18) and closed towards the top, the hot and water mixing valve being **characterized in that** the lower plate (18) has two slits (21,22) for the inlet of hot and cold water, said slits having an inner edge and an opposite outer edge and being circumferentially delimited by radial edges, said inner edge and said outer edge being at least partially convergent, the body having a diameter (d) of about 25.4 mm and a height (h), including the bottom but excluding the collar, of about 24-26.5 mm.

2. Mixing valve in accordance with claim 1, in which the height and the diameter of the body have a ratio of about 1 - 1.1 to one another.

3. Mixing valve in accordance with claims 1 and 2, in which the body has a radial tooth (16) for orienting and positioning.

4. Mixing valve in accordance with the above claims, in which the bottom does or does not have at least one centering foot.

5. Mixing valve in accordance with the above claims, in which a temperature regulator (34) and a supply regulator are associated with the control unit (13).

## Patentansprüche

1. Warm- und Kaltwasser-Mischventil, bestehend aus einem Ventilkörper (11) der eine Ventileinheit (12) enthält, mit Keramikplättchen zur Steuerung der teilweisen oder vollständigen Öffnung und Schließung des ein- und austretenden Wasserdurchflusses und mit einem Steuergerät (13) für diese Ventileinheit; der Körper ist im Wesentlichen zylinderförmig, hohl, an der Basis mit einem Boden (14) verschlossen, auf dem die Ventileinheit (12) aufgesetzt ist und hat oben einen Hals (15), in den das Steuergerät (13) montiert ist, mit der Möglichkeit auf zwei Orthogonalachsen Schwenkbewegungen und Rotationen auszuführen und in der die Ventileinheit (12) aus zwei überlagerten Plättchen besteht, die Öffnungen für den Eintritt, das Mischen und den Austritt des Wassers haben; die beiden überlagerten Plättchen bestehen aus einem Festplättchen (18) und einem beweglichen Plättchen (19), wobei das bewegliche Plättchen (19) eine Mischkammer (24) hat, die nach unten zum Festplättchen(18) hin offen und nach oben hin geschlossen ist; das Warm- und Kaltwasser-Mischventil zeichnet sich dadurch aus, das das untere Plättchen (18) zwei Spalten (21, 22) für den Eintritt von warmen und kaltem Wasser hat, diese Spalten haben einen inneren Rand und einen gegenüberliegenden äußeren Rand und sind ringsum mit Radialrändern begrenzt. Teilweise konvergieren der innere und der äußere Rand, da das Gehäuse einen Durchmesser (d) von circa 25,4 mm und eine Höhe (h) von circa 24-26,5 mm hat, wobei der Boden eingeschlossen, der Hals jedoch ausgeschlossen ist.

2. Mischventil gemäß der Forderung 1, bei dem die Höhe und der Durchmesser dieses Körpers ein Verhältnis von circa 1-1,1 haben.

3. Mischventil gemäß Forderungen 1 und 2, in dem das Gehäuse einen Radialzahn (16) zur Ausrichtung und Positionierung hat.

4. Mischventil gemäß den vorausgehenden Forderungen, dessen Boden mindestens einen oder keinen Zentrierstift aufweist.

5. Mischventil gemäß den vorausgehenden Forderungen, in dem das Steuergerät (13) mit einem Temperaturregler (34) und einem Durchflussregler verbunden ist.

## Revendications

1. Robinet mitigeur d'eau chaude et froide, comprenant un corps principal (11) qui contient une unité de soupape (12) avec des plaquettes céramique pour le contrôle de l'ouverture et de la fermeture partielle ou totale des passages d'entrée et de sortie de l'eau, et une unité de commande (13) pour cette unité de soupape, le corps ètant de forme principalement cylindrique, creux, fermé à la base par un fond (14) sur lequel repose l'unité de soupape (12) et ayant un col (15) à l'extrémité sur lequel est montée l'unité de commande (13) avec la possibilité d'oscillations et rotations sur deux axes orthogonaux, et où l'unité de soupape (12) il se compose de deux plaquettes superposées avec des passages d'entrée, mélange et sortie de l'eau, les deux plaques superposées comprenant une plaquette fixe (18) et une plaquette mobile (19) où la plaquette mobile (19) a une chambre de mélange (24) qui est ouverte en bas vers la plaquette fixe (18) et fermée vers le haut, le robinet mitigeur d'eau chaude et froide ètant **caractérisé en ce que** la plaquette du bas (18) a deux fentes (21, 22) pour l'entrée d'eau chaude et froide, ces fentes ont un bord interne et un bord externe opposé et leur circonférence est délimitée par des bords radiaux, le bord interne et le bord externe sont en partie convergents, le corps a 24,4 mm de diamètre et 24- 26,5mm environ de haut y compris le fond mais sans le col.

2. Robinet mitigeur selon la revendication 1, où la hauteur et le diamètre du corps ont entre eux un rapport d'environ 1-1, 1.

3. Robinet mitigeur selon la revendication 1 et 2, où le corps a une étoile (16) d'orientation et de positionnement.

4. Robinet mitigeur selon les revendications précédentes, où le fond présente ou non au moins un pied de centrage.

5. Robinet mitigeur selon les revendications précédentes, où au groupe de commande (13) sont associés un régulateur de température (34) et un régulateur de débit.
